# EUROPÄISCHE PATENTSCHRIFT

(11) **EP 1 366 292 B1**
(45) Veröffentlichungstag und Bekanntmachung des Hinweises auf die Patenterteilung: **25.02.2009**
(21) Anmeldenummer: 02702370.4
(22) Anmeldetag: 26.02.2002
(51) Int. Cl.: F04B 39/00, F04B 39/02, F04B 27/02

(54) **TROCKENLAUFENDER KOLBENVERDICHTER (KURBELTRIEBSCHMIERUNG)**
DRY-RUNNING PISTON COMPRESSOR (CRANKSHAFT DRIVE LUBRICATION)
COMPRESSEUR A PISTON A FONCTIONNEMENT A SEC (LUBRIFICATION DE TRANSMISSION A VILEBREQUIN)

(30) Priorität: 28.02.2001 DE 10109514
(43) Veröffentlichungstag der Anmeldung: 03.12.2003
(73) Patentinhaber: KNORR-BREMSE Systeme für Schienenfahrzeuge GmbH, 80809 München (DE)
(72) Erfinder: SCHNEIDER, Klaus-Michael, 85229 Markt Indersdorf (DE); HARTL, Michael, 82008 Unterhaching (DE)
(86) Internationale Anmeldenummer: PCT/EP2002/002041
(87) Internationale Veröffentlichungsnummer: WO 2002/068822

(56) Entgegenhaltungen:
- US-A- 2 005 028
- US-A- 2 288 596
- US-A- 2 417 197
- US-A- 5 195 420
- PATENT ABSTRACTS OF JAPAN vol. 2000, no. 04, 31. August 2000 (2000-08-31) -& JP 2000 018235 A (AISIN SEIKI CO LTD), 18. Januar 2000 (2000-01-18)
- PATENT ABSTRACTS OF JAPAN vol. 2000, no. 23, 10. Februar 2001 (2001-02-10) -& JP 2001 165047 A (ANEST IWATA CORP), 19. Juni 2001 (2001-06-19)

## Beschreibung

Die Erfindung betrifft einen trockenlaufenden Kolbenverdichter, insbesondere für Schienenfahrzeuge, mit einem Kurbelgehäuse für eine hierin drehbar gelagerte Kurbelwelle, an dem mindestens ein topfartiger Zylinder mit einem zugeordneten innenliegenden Kolben angeordnet ist, wobei die Kurbelwelle über ein Pleuellager als erste Lagerstelle mit einem Ende eines Pleuels in Verbindung steht, um die Drehbewegung in eine lineare Bewegung für den am anderen Ende des Pleuels über ein Kolbenbolzenlager als zweite Lagerstelle gelagerten Kolben umzuwandeln.

Derartige Kolbenverdichter sind beispielsweise aus der US-A-2 417 197 bekannt.

An einem solchen gattungsgemäßen Kolbenverdichter ist zur Erzeugung einer Drehbewegung für die Kurbelwelle gewöhnlich eine separate Antriebseinheit befestigt. Als Antriebseinheit kommt meist ein Elektromotor oder dergleichen zum Einsatz. Der insoweit aus dem Kolbenverdichter und der Antriebseinheit gebildete Kolbenkompressor wird beispielsweise im Fahrzeugbereich zur Erzeugung von Druckluft verwendet, die zum Betrieb von fahrzeugspezifischen Druckmittelaggregaten - wie Bremsen oder dergleichen - benötigt wird.

Die im Fahrzeugbereich eingesetzten Kolbenkompressoren sind gewöhnlich einem langen Dauerbetrieb oder einem häufigen Ein- und Ausschalten ausgesetzt, was reibungsbedingt zu einer hohen Wärmeentwicklung führt. Es wurden in diesem Anwendungsbereich daher bisher vorwiegend ölgeschmierte Kolbenverdichter verwendet, die erforderlichenfalls eine ausreichende Abfuhr überschüssiger Wärme über einen Ölkühlungskreislauf zur Sicherstellung einer stets optimalen Betriebstemperatur aufweisen.

In jüngster Zeit kommen in verschiedenen Industriebereichen auch trockenlaufende Kolbenverdichter zum Einsatz. Ein trockenlaufender Kolbenverdichter arbeitet ohne ein im Gehäuse befindliches Schmieröl. Statt dessen gehört die Schmierung an der Kolbenlaufbahn durch eine besonders reibungsarme dynamische Dichtungsanordnung ersetzt. Alle drehenden Bauteile sind darüber hinaus wälzgelagert. Die gekapselten Wälzlager werden dabei mit einer temperaturbeständigen langlebigen Fettfüllung versehen. Im Ventilbereich werden gleitgeführte Bauteile weitestgehend vermieden. Durch die Summe dieser Maßnahme ist eine Ölschmierung im Kolbenverdichter entbehrlich. Folglich kann beispielsweise auch die Gefahreiner Verölung der vom Kolbenverdichter erzeugten Druckluft ausgeschlossen werden. Durch den Wegfall eines Ölkreislaufs und größerer zusätzlicher Ausgleichsmassen kann ein trockenlaufender Kolbenverdichter darüber hinaus auch relativ leichtbauend ausgeführt werden.

Die vorliegende, einen trockenlaufenden Kolbenverdichter betreffende Erfindung ist bei ganz unterschiedlichen Zylinderanordnungen am Kurbelgehäuse, wie einer V-Anordnung oder einer Anordnung nach Art einer Reihenmaschine anwendbar. Weiterhin kann der Kolbenverdichter auch mehrstufig mit einer Niederdruckstufe und mindestens einer weiteren darauf folgenden Hochdruckstufe ausgebildet sein. Ferner ist auch eine ganz unterschiedliche Befestigung am Fahrzeug möglich, wie beispielsweise hängend am Fahrzeugboden (Unterflur), horizontal oder vertikal stehend innerhalb des Aufbaus des Fahrzeuges (Inneneinbau) oder dergleichen.

Im Fahrzeugbereich, insbesondere bei Schienenfahrzeugen, sind lange Laufzeiten und Wartungsintervalle des Kolbenkompressors gefordert. So sollte ein im Schienenfahrzeugbau eingesetzter Kolbenkompressor frühestens erst nach sechs Jahren überholt werden, was im Durchschnitt etwa 12.000 Betriebsstunden entspricht. Dieser Aspekt stand bislang dem Einsatz von trockenlaufenden, d. h. ölfreien Kompressoren im Fahrzeugbereich entgegen, da die Fettgebrauchsdauer in lebensdauergeschmierten Wälzlagern bei dem in Verdichtern üblichen Temperaturbereich nicht ausreichend ist, um diese Wartungsintervalle ohne Lagerschaden sicher zu überstehen. Selbst bei Senkung der Betriebstemperaturen durch eine mehrstufige Verdichtung mit Zwischenkühlung sind der Lebensdauer des Fettes Zeitgrenzen gesetzt. Darüber hinaus ist die Nachschmierung der Lagerstellen wegen einer schlechten Zugänglichkeit innerhalb des Kurbelgehäuses recht problematisch. Ein weiteres Problem ergibt sich aus der Tatsache, dass beim Nachschmieren austretendes Fett auf die Zylinderlaufflächen der Kolbenmaschine gelangen kann, was zu einem erhöhten Verschleiß an den trockenlaufenden Kolbenringen und den Kolbenbeschichtungen führt.

Es ist die Aufgabe der vorliegenden Erfindung, einen langlebigen trockenlaufenden Kolbenverdichter zu schaffen, bei dem auf einfache Weise eine optimale Schmierung der Lagerstellen des Kurbeltriebs erzielt wird.

Die Aufgabe wird, ausgehend von einem trockenlaufenden Kolbenverdichter gemäß dem Oberbegriff des Anspruchs 1, in Verbindung mit dessen kennzeichnenden Merkmalen gelöst. Weitere die Erfindung verbessernde Maßnahmen sind in den nachfolgenden abhängigen Ansprüche dargelegt.

Die Erfindung schließt die technische Lehre ein, dass zum Nachschmieren der Lagerstellen des Kurbeltriebs außen an jedem Pleuel mindestens ein Schmiernippel angebracht ist, von dem aus ein korrespondierender innenliegender Schmierkanal verläuft, der am Pleuellager und/oder am Kurbelwellenlager einmündet.

Der Vorteil dieser konstruktiv einfach zu realisierenden Lösung besteht darin, dass nunmehr eine dosierbare Nachschmierung der an sich dauergeschmierten Lagerstellen möglich ist. Es hat sich erwiesen, dass ein innerhalb des Pleuels verlaufender Schmierkanal die Festigkeit des Pleuels im Betrieb nicht erheblich beeinträchtigt. Der Schmiernippel ist so am Pleuel zu platzieren, dass eine gute Zugänglichkeit von außen her gegeben ist.

Vorzugsweise ist das Kurbelgehäuse mit mindestens einer verschließbaren Öffnung versehen, über die mittels eines Schmierwerkzeuges von außen her eine Zufuhr von Schmiermittel an die Schmiernippel erfolgt. Die Öffnung im Kurbelgehäuse kann dabei mit einem Deckel verschlossen werden, der mittels einer Schraubverbindung lösbar am Kurbelgehäuse befestigt ist.

Bei dieser vorstehend beschriebenen Anordnung kann die Nachschmierung besonders vorteilhaft manuell mittels einer Dosierpresse erfolgen. Eine Dosierung der Abgabemenge von Schmiermittel kann über ein Absperrventil durchgeführt werden. Eine Nachfüllung von Schmiermittel kann über eine austauschbare Fettkartusche erfolgen. Die Fettdosierpresse kann dabei elektrisch angetrieben sein oder auch manuell mittels einer Hebevorrichtung betätigt werden.

Vorteilhafterweise ist an dem Schmierwerkzeug ein rohrförmiger Ansatz zur Abgabe des Schmiermittels ausgebildet. Da sich die Schmiernippel innerhalb des Kurbelgehäuses befinden, kann es vorteilhaft sein, an dem Schmierwerkzeug elektrische Leuchtmittel zum Beleuchten des innerhalb des Kugelgehäuses befindlichen Nachschmierbereiches anzubringen.

Besonders vorteilhaft ist es, wenn die Schmiernippel im Schaftbereich des Pleuels angeordnet sind, da bei dieser Platzierung eine besonders günstige Zugänglichkeit über die Öffnung im Kurbelgehäuse realisiert werden kann. Insbesondere trifft dies bei einer im wesentlichen horizontalen Anordnung der Kurbeltriebe im Kurbelgehäuse zu.

Der vom Schmiernippel abgehende Schmierkanal kann in günstiger Weise in Form einer einzigen, durch den Schaft verlaufenden Durchgangsbohrung hergestellt werden, die mittels eines Verschlusskörpers in zwei jeweils einer Lagerstelle zugeordneten Teilkanälen abgetrennt ist. Hierbei ist jedem Teilkanal auch ein eigener Schmiernippel zugeordnet. Der Verschlusskörper ist vorzugsweise als ein Kugelelement ausgebildet, das in die nach Art einer abgesetzten Bohrung ausgebildeten Durchgangsbohrung im Bereich des Absatzes eingepresst ist. Alternativ hierzu ist es auch denkbar, den Schmierkanal in Form zweier entlang des Schaftes verlaufender Grundbohrungen herzustellen, die jeweils zu einer Lagerstelle führen und denen jeweils ein eigener Schmiernippel zugeordnet ist. Von Vorteil ist es weiterhin, wenn im Bereich des Pleuellagers und/oder im Bereich des Kurbelwellenlagers ein Fettauffangraum im Pleuel zum Speichern von Schmiermittel vorgesehen ist. Hierdurch kann zum einen eine Bevorratung von ausreichend Schmiermittel für die zu versorgende Lagerstelle geschaffen werden und gleichfalls auch ein unerwünschtes Austreten von Schmiermittel aus dem Lagerbereich verhindert werden.

Weitere die Erfindung verbessernde Maßnahmen werden nachstehend mit der Beschreibung eines bevorzugten Ausführungsbeispiels der Erfindung anhand der Figuren näher dargestellt.

Es zeigt:
- Fig. 1: eine perspektivische Außenansicht eines trockenlaufenden Kolbenverdichters mit Antriebseinheit, die einen im Schienenfahrzeugbau eingesetzten Kolbenkompressor bilden,
- Fig. 2: einen Längsschnitt durch ein Pleuel eines Kurbelgetriebes des Kolbenverdichters gemäß Fig. 1, und
- Fig. 3: einen Querschnitt durch den Kolbenverdichter gemäß Fig. 1 im Bereich zweier gegenüber liegender Zylinder.

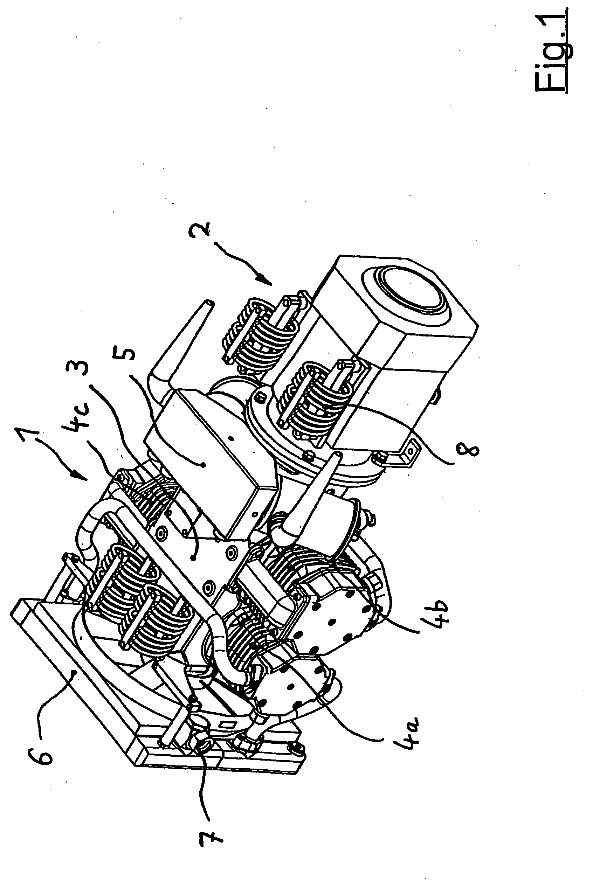

Ein trockenlaufender Kolbenkompressor gemäß Fig. 1 besteht im wesentlichen aus einer 2-stufigen Verdichtereinheit 1 mit angeflanschter Antriebseinheit 2. Die Antriebseinheit 2 ist als Elektromotor ausgeführt und ist am Kurbelgehäuse 3 der Verdichtereinheit 1 über eine Schraubverbindung lösbar befestigt. Die Antriebseinheit 2 versetzt eine im Kurbelgehäuse 3 angeordnete - hier nicht sichtbare - Kurbelwelle in eine Drehbewegung, welche in eine Hubbewegung für Kolben umgesetzt sind, welche innerhalb der am Kurbelgehäuse 3 befestigten topfartigen Zylinder 4a-4c zur Drucklufterzeugung untergebracht sind. Durch die Kolbenhubbewegung wird aus der Atmosphäre Luft über eine eingangsseitige Filteranordnung 5 angesaugt und innerhalb der Zylinder 4a-4c stufenweise verdichtet. Die so erzeugte Druckluft passiert eine Kühleranordnung 6 und steht danach dem Druckluftsystem eines Schienenfahrzeuges über den Anschluss 7 zur Verfügung.

In diesem Ausführungsbeispiel ist die Verdichtereinheit 1 als mehrstufiger Kolbenverdichter mit Niederdruckstufe und Hochdruckstufe ausgeführt. Der Niederdruckstufe sind die Zylinder 4b und 4c zugeordnet; zur Hochdruckstufe gehört der Zylinder 4a. Alle Zylinder 4a-4c sind am Kurbelgehäuse 3 der Verdichtereinheit 1 gegenüberliegend in 180° V-Bauweise angeordnet. Zur Befestigung der Verdichtereinheit 1 mit angeflanschter Antriebseinheit 2 an einer - hier nicht weiter dargestellten - Trägerkonstruktion eines Schienenfahrzeuges sind Verbindungsmittel 8 vorgesehen.

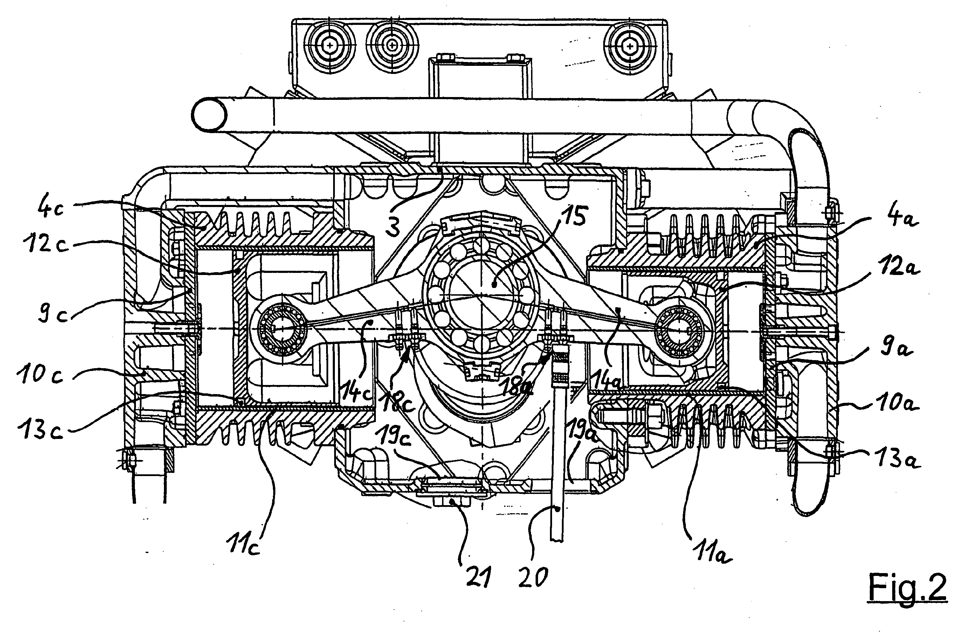

Die Figur 2 gibt einen Einblick in das Innere der Verdichtereinheit 1, beispielhaft im Bereich der gegenüber liegenden Zylinder 4a und 4c. Die Zylinder 4a und 4c sind stirnseitig je über eine Ventilplatte 9a und 9c mittels je eines Zylinderkopfes 10a bzw. 10c verschlossen. In den Zylindern 4a und 4c ist je eine Laufbuchse 11a bzw. 11c aus einem reibungsminimalen harten Werkstoff eingelassen, innerhalb der je ein Kolben 12a bzw. 12c zur Drucklufterzeugung hin- und herbewegbar angeordnet ist Als dynamische Dichtung zwischen der Laufbuchse 11a, 11c und dem zugeordneten Kolben 12a bzw. 12c ist hier ein Dichtring 13a bzw. 13c innerhalb einer nutförmigen Ausnehmung am oberen Randbereich des Kolbens 12a bzw. 12c vorgesehen. Der Dichtring 13a und 13c besteht ebenfalls aus einem reibungsminimalen Werkstoff. Der lineare Antrieb der Kolben 12a und 12c erfolgt über einen Kurbeltrieb mittels Pleuel 14a bzw. 14c. Die Pleuel 14a und 14c sind auf der den Kolben 12a und 12c gegenüber liegenden Seite mit der Kurbelwelle 15 über ein Pleuellager 16 verbunden. Die kolbenseitige Befestigung des Pleuels 14a, 14c erfolgt über ein zugeordnetes Kolbenbolzenlager 17. Sowohl das Pleuellager 16 als auch das Kolbbolzenlager 17 sind nach Art eines dauergeschmierten Wälzkörperlagers ausgebildet.

Zum Nachschmieren der beiden Lagerstellen sind außen an jedem Pleuel 14a, 14c je zwei Schmiernippel 18a, 18c, angebracht. Das Kurbelgehäuse 3 ist an der unteren Seite mit zwei je einem Pleuel 14a und 14b zugeordneten Öffnungen 19a, 19c versehen, über die mittels eines Schmierwerkzeuges 20 von außen her eine Zufuhr von Schmiermittel an die Schmiernippel 18a und 18c möglich ist. Die Öffnungen 19a und 19c im Kurbelgehäuse 3 sind je über einen einschraubbaren Deckel 21 verschließbar.

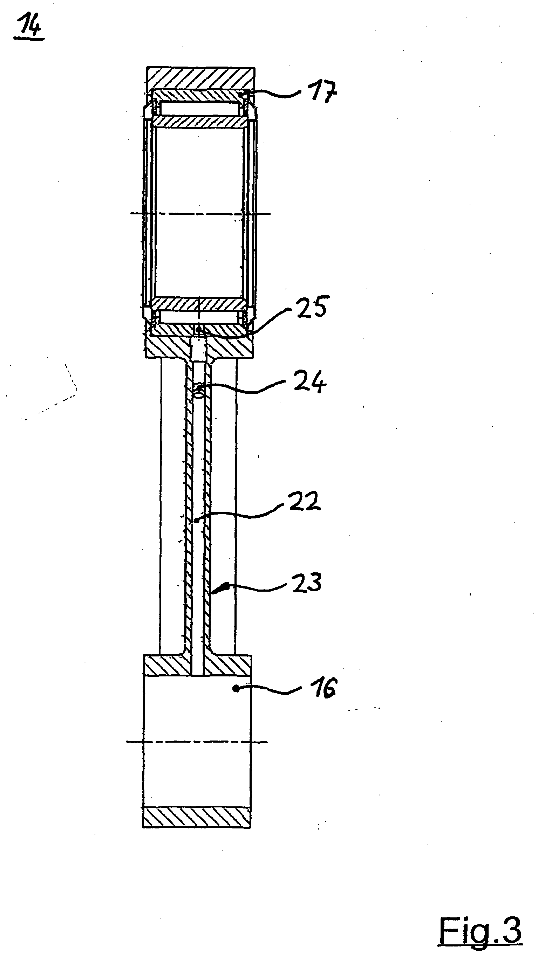

Innerhalb des in Figur 3 als Einzelteil gezeigten Pleuels 14 verläuft ein Schmierkanal 22. Der Schmierkanal 22 ist in Form einer einzigen durch den Schaft 23 des Pleuels 14 verlaufenden Durchgangsbohrung ausgebildet Die Durchgangsbohrung ist mittels eines Verschlusskörpers 24 in Form eines Kugelelements in zwei jeweils einer Lagerstelle zugeordnete Teilkanäle abgetrennt, wobei jedem Teilkanal ein eigenerhier nicht gezeigter - Schmiernippel zugeordnet ist. Der eine Teilkanal führt dabei zum Kolbenbolzenlager 17; der andere Teilkanal ist dem Pleuellager 16 zugeordnet. Um eine Versorgung des Pleuellagers 16 sowie des Kolbenbolzenlagers 17 mit Schmiermittel zu gewährleisten, befinden sich je zum Teilkanal korrespondierend in den Außenringen des Pleuellagers 16 sowie des Kolbenbolzenlagers 17 diverse Durchbrüche 25, durch die das Schmiermittel in den Bereich der Wälzkörper gelangt.

### Bezugszeichenliste

Kolbenverdichter
Antriebseinheit
Kurbelgehäuse
Zylinder
Filteranordnung
Kühleranordnung
Anschluß 8
Verbindungsmittel 9
Ventilplatte
Zylinderkopf
Laufbuchse
Kolben
Dichtring
Pleuel
Kurbelwelle
Pleuellager
Kolbenbolzenlager
Schmiernippel
Öffnung
Schmierwerkzeug 21
Deckel
Schmierkanal
Schaft
Verschlußkörper
Durchbruch

## Patentansprüche

1. Trockenlaufender Kolbenverdichter, insbesondere für Schienenfahrzeuge, mit einem Kurbelgehäuse (3) für eine hierin drehbare gelagerte Kurbelwelle (15), an dem mindestens ein topfartiger Zylinder (4a-4c) mit einem zugeordneten innenliegenden Kolben (12a, 12e) angeordnet ist, wobei die Kurbelwelle (15) über ein Pleuellager (16) als erste Lagerstelle mit einem Ende des Pleuels (14a, 14c) in Verbindung steht, um die Drohbewegung in eine lineare Bewegung für den am anderen Ende des Pleuels (14a,14c) über ein Kolbenbolzenlager (17) als zweite Lagerstelle gelagerten Kolben (12a, 12c) umzuwandeln, wobei im Pleuel (14a, 14c) ein Schmierkanal (22) verlauft, der am Pleuellager (16) und/oder am Kolbenbolzen (17) einmündet,
**dadurch gekennzeichnet, dass** zum Nachschmieren der Lagerstelle (n) außen im Schaftbereich an jedem Pleuel (14a, 14c) mindestens ein Schmiernippel (18a, 13c) angebraucht ist, von dem aus der korrespondierende innenliegende Schmierkanal (22) verläuft, welcher in Form einer einzigen durch den Schaft (23) verlaufenden Durchgangsbohrung ausgebildet ist, die mittels eines Verschlusskörpers (24) in zwei jeweils einer Lagerstelle zugeordnete Teilkanäle abgetrennt ist, wobei jedem Teilkanal ein eigener Schmiernippel (18a, 18c) zugeordnet ist.

2. Trockenlaufender Kolbenverdichter gemäß Anspruch 1,
**dadurch gekennzeichnet, dass** das Kurbelgehäuse 3 mit mindestens einer verschließbaren Öffnung 19a, 19c versehen ist, über die mittels eines Schmierwerkzeuges 20 von außen her eine Zufuhr von Schmiermittel an die Schmiernippel 18a, 18c erfolgt.

3. Trockenlaufender Kolbenverdichter gemäß Anspruch 2,
**dadurch gekennzeichnet, dass** die Öffnung 19a, 19c im Kurbelgehäuse 3 über einen mittels einer Schraubverbindung lösbar befestigten Deckel 21 verschließbar ist.

4. Trockenlaufender Kolbenverdichter gemäß Anspruch 1,
**dadurch gekennzeichnet, dass** die Durchgangsbohrung nach Art einer abgesetzten Bohrung ausgebildet ist, wobei im Bereich des Absatzes ein Kugelelement als Verschlusskörper 24 eingepresst ist

5. Trockenlaufender Kolbenverdichter gemäß Anspruch 1,
**dadurch gekennzeichnet, dass** der Schmierkanal 22 in Form zweier entlang des Schafts 23 verlaufender Grundbohrungen ausgebildet ist, die jeweils zu einer Lagerstelle führen und denen jeweils ein eigener Schmiernippel zugeordnet ist.

6. Trockenlaufender Kolbenverdichter nach einem der vorstehenden Ansprüche,
**dadurch gekennzeichnet, dass** im Bereich des Pleuellagers 16 und/oder am Kolbenbolzenlagers 17 ein Fettauffangraum zum Speichern von Schmiermittel vorgesehen ist

7. Trockenlaufender Kolbenverdichter nach einem der vorstehenden Ansprüche,
**dadurch gekennzeichnet, dass** die Nachschmierung manuell mittels eines als Fettdosierpresse ausgebildeten Schmierwerkzeuges 20 erfolgt.

8. Trockenlaufender Kolbenverdichter nach einem der vorstehenden Ansprüche,
**dadurch gekennzeichnet, dass** an dem Schmierwerkzeug 20 elektrische Leuchtmittel zum Beleuchten des innerhalb des Kurbelgehäuses 3 befindlichen Nachschmierbereichs angebracht sind.

## Claims

1. Non-lubricated piston compressor, in particular for rail vehicles, comprising a crankcase (3) for a crankshaft (15) supported therein for rotation, on which crankcase at least one pot-type cylinder (4a - 4c) with an associated interior piston (12a, 12e) is disposed, with said crankshaft (15) being connected via a connecting-rod bearing (16) as first bearing site to one end of the connecting rod (14a, 14c) for converting the rotary movement into a linear movement for the piston (12a, 12c) supported via a piston-pin bearing (17) as second bearing site on the other end of said connecting rod (14a, 14c), with a lubrication passage (22) extending in said connecting rod (14a, 14c), which opens at said connecting-rod bearing (16) and/or at said piston-pin bearing (17),
**characterised in that** at least one lubrication fitting (18a, 18c) is mounted for relubrication of the bearing site (n) on the outside in the shaft zone on each connecting rod (14a, 14c), from which lubrication fitting the corresponding interior lubrication passage (22) extends, which is configured in the form of a single through-hole extending through said shaft (23), which is separated by means of a closing body (24) into two sub-passages associated each to one bearing site, with a separate lubrication fitting (18a, 18c) being associated with each sub-passage.

2. Non-lubricated piston compressor according to Claim 1, **characterised in that** said crankcase (3) is provided with at least one opening (19a, 19c) adapted to be closed, via which the lubricant is supplied by means of a lubricating tool (20) from the outside to said lubrication fittings (18a, 18c).

3. Non-lubricated piston compressor according to Claim 2, **characterised in that** said opening (19a, 19c) in said crankcase (3) is adapted to be closed through a cover (21) detachably fastened by means of a threaded joint.

4. Non-lubricated piston compressor according to Claim 1, **characterised in that** said through-hole is configured in the manner of a stepped bore, with a spherical element being pressed in as closing body (24) in the region of said step.

5. Non-lubricated piston compressor according to Claim 1, **characterised in that** said lubrication passage (22) is configured in the form of two primary bores extending along said shaft (23), with each of said primary bores leading to a bearing site and with a respective lubrication fitting being associated with each of them.

6. Non-lubricated piston compressor according to any of the preceding Claims, **characterised in that** a grease collector space is provided in the region of said connecting-rod bearing (16) and/or on said piston-pin bearing (17) for storing the lubricant.

7. Non-lubricated piston compressor according to any of the preceding Claims, **characterised in that** relubrication is manually performed by means of a lubricating tool (20) configured in the form of a grease-dosing pressure gun.

8. Non-lubricated piston compressor according to any of the preceding Claims, **characterised in that** electrical luminous means are provided on said lubricating tool (20) for illuminating the relubrication zone provided inside said crankcase (3).

## Revendications

1. Compresseur à piston à fonctionnement à sec, destiné notamment à des véhicules sur rails, comprenant un carter de vilebrequin (3) qui est destiné à un vilebrequin (15) monté rotatif dans ce carter et contre lequel est disposé au moins un cylindre (4a-4c) en forme de pot doté d'un piston (12a, 12e) associé situé à l'intérieur du cylindre, sachant que le vilebrequin (15) est relié à une extrémité d'une bielle (14a, 14c) par l'intermédiaire d'un coussinet de bielle (16) en tant que premier point d'appui, afin de transformer le mouvement de rotation en un mouvement linéaire du piston (12a, 12c) monté à l'autre extrémité de la bielle (14a, 14c) par l'intermédiaire d'un palier (17) de pied de bielle en tant que second point d'appui, sachant qu'un canal de lubrification (22) s'étend dans la bielle (14a, 14c), canal qui débouche au niveau du coussinet de bielle (16) et/ou au niveau du palier (17) de pied de bielle,
**caractérisé en ce que**, afin de permettre le regraissage du ou des points d'appui, au moins un graisseur (18a, 18c) est disposé à l'extérieur sur chaque bielle (14a, 14c) dans la région du corps de bielle, graisseur à partir duquel s'étend le canal de lubrification intérieur correspondant (22) qui est réalisé sous la forme d'un perçage unique traversant s'étendant à travers le corps de bielle (23), perçage qui, au moyen d'un obturateur (24), est séparé en deux canaux partiels associés chacun à un point d'appui, un propre graisseur (18a, 18c) étant associé à chaque canal partiel.

2. Compresseur à piston à fonctionnement à sec suivant la revendication 1, **caractérisé en ce que** le carter de vilebrequin (3) est pourvu d'au moins une ouverture obturable (19a, 19c) par l'intermédiaire de laquelle s'effectue de l'extérieur, au moyen d'un outil de graissage (20), un apport de lubrifiant au graisseur (18a, 18c).

3. Compresseur à piston à fonctionnement à sec suivant la revendication 2, **caractérisé en ce que** l'ouverture (19a, 19c) dans le carter de vilebrequin (3) peut être obturée au moyen d'un couvercle (21) fixé de manière amovible au moyen d'une liaison vissée.

4. Compresseur à piston à fonctionnement à sec suivant la revendication 1, **caractérisé en ce que** le perçage traversant est réalisé à la manière d'un perçage étagé, sachant qu'un élément sphérique est emmanché comme obturateur (24) dans la région du gradin.

5. Compresseur à piston à fonctionnement à sec suivant la revendication 1, **caractérisé en ce que** le canal de lubrification (22) est réalisé sous la forme de deux perçages borgnes s'étendant le long du corps de bielle (23), qui mènent chacun à un point d'appui et à chacun desquels est associé un propre graisseur.

6. Compresseur à piston à fonctionnement à sec suivant l'une des revendications précédentes, **caractérisé en ce qu'**une chambre collectrice de graisse est prévue dans la région du coussinet de bielle (16) et/ou du palier (17) de pied de bielle pour emmagasiner du lubrifiant.

7. Compresseur à piston à fonctionnement à sec suivant l'une des revendications précédentes, **caractérisé en ce que** le regraissage s'effectue manuellement au moyen d'un outil de graissage (20) réalisé sous forme de presse doseuse de graisse.

8. Compresseur à piston à fonctionnement à sec suivant l'une des revendications précédentes, **caractérisé en ce que** des moyens d'éclairage électriques sont installés sur l'outil de graissage (20) pour éclairer la région du regraissage, située à l'intérieur du carter de vilebrequin (3).
